# FASCICULE DE BREVET EUROPEEN

(11) **EP 0 518 410 B1**
(45) Date de publication et mention de la délivrance du brevet: **06.09.1995**
(21) Numéro de dépôt: 92201555.7
(22) Date de dépôt: 01.06.1992
(51) Int. Cl.: C01G 49/10, C22B 3/00

(54) **Procédé et installation pour la fabrication de solutions aqueuses de chlorure ferrique**
Verfahren und Vorrichtung zur Herstellung wässrigen Eisenchloridlösungen
Process and apparatus for the production of aqueous solutions of iron chloride

(30) Priorité: 06.06.1991 BE 9100550
(43) Date de publication de la demande: 16.12.1992
(73) Titulaire: SOLVAY (Société Anonyme), B-1050 Bruxelles (BE)
(72) Inventeur: van Diest, Jacques, B-1640 Rhode-Saint-Genese (BE); Brahm, Jacques, B-1850 Grimbergen (BE)
(74) Mandataire: Anthoine, Paul

(56) Documents cités:
- DE-A- 2 830 979
- FR-A- 1 072 600
- FR-A- 2 489 369
- US-A- 4 997 533
- HYDROMETALLURGY. vol. 23, no. 1, Octobre 1989, AMSTERDAM NL pages 77 - 90; G.PATERMARAKIS: 'THE LEACHING OF IRON OXIDES IN BOEHMITIC BAUXITE BY HYDROCHLORIC ACID'

## Description

L'invention concerne un procédé pour la fabrication de solutions aqueuses de chlorure ferrique.

Pour fabriquer des solutions aqueuses de chlorure ferrique, on propose, dans le document GB-A-734081 (THE UNITED STEEL COMPANIES LTD), de dissoudre un minerai de fer dans une solution aqueuse d'acide chlorhydrique et de traiter ensuite la suspension aqueuse résultante sur un filtre, pour en séparer les matières insolubles qu'elle contient. Dans ce procédé connu, les matières insolubles de la suspension constituent la gangue du minerai et leur volume est important, ce qui impose des filtres de grande capacité.

Dans le document GB-A-409847 (PETER SPENCE & SONS, LTD), on met en oeuvre un minerai d'ilménite à l'état d'un lit de fragments sur une grille et on fait percoler un courant d'acide chlorhydrique à travers le lit. Dans ce procédé connu, le fer et le titane du minerai passent en solution et les matières insolubles de la gangue du minerai sont entraînées avec la solution, ce qui conduit au désavantage énoncé ci-dessus. Par ailleurs, des particules de minerai, contenant encore des oxydes de fer et de titane sont inévitablement entraînées et évacuées avec les matières insolubles, ce qui affecte négativement le rendement du procédé.

L'invention vise à remédier au désavantage précité, en fournissant un procédé nouveau de fabrication de solutions aqueuses de chlorure ferrique au départ de minerais de fer oxydé, qui peut être exécuté de manière continue, facilite la séparation des matières insolubles et présente un rendement amélioré par rapport à celui des procédés connus.

En conséquence, l'invention concerne un procédé de fabrication de solutions aqueuses de chlorure ferrique, dans lequel on fait circuler une solution aqueuse d'acide chlorhydrique à travers un lit de fragments d'un minerai de fer oxydé ; selon l'invention, on soumet la solution aqueuse d'acide chlorhydrique à une circulation ascendante à travers le lit, on recueille du lit une suspension de particules du minerai dans une solution aqueuse de chlorure ferrique, on traite la suspension pour en extraire les particules, on recueille séparément les particules et la solution de chlorure ferrique et on recycle les particules dans la solution aqueuse d'acide chlorhydrique.

Dans le procédé selon l'invention, le minerai de fer doit être un minerai oxydé. On préfère utiliser un minerai d'hématite, tel que ceux exploités dans l'industrie sidérurgique. Le minerai peut être utilisé tel quel ou après avoir subi une opération d'enrichissement en oxyde de fer. On utilise avec avantage un minerai à 96 % en poids d'hématite, tel que ceux extraits de gisements situés en Amérique du Sud.

Le minerai est mis en oeuvre à l'état d'un lit de fragments. Celui-ci est généralement un lit fixe. Il est souhaitable d'utiliser un minerai calibré, présentant une distribution granulométrique serrée. Celle-ci est fixée par les conditions opératoires du procédé, notamment par la vitesse ascensionnelle de la solution d'acide chlorhydrique à travers le lit. On préconise par exemple d'utiliser un minerai dont la granulométrie moyenne, définie par tamisage, est située entre 1 et 10 mm ou entre 3 et 30 mm.

L'origine et la concentration de la solution d'acide chlorhydrique n'est pas critique. Des solutions aqueuses utilisables dans le procédé selon l'invention sont celles dont la teneur pondérale en acide chlorhydrique est supérieure à 20 %, de préférence au moins égale à 26 %. Les solutions aqueuses à 34 % d'acide chlorhydrique présentent l'avantage de permettre l'obtention directe de solutions aqueuses commerciales, contenant 40 % en poids de chlorure ferrique.

La température dans le lit doit être suffisante pour initier la réaction de l'oxyde de fer avec l'acide chlorhydrique. A cet effet, il est avantageux de réaliser dans le lit une température supérieure à 50° C, de préférence au moins égale à 75° C. Il convient toutefois d'éviter des températures trop élevées, qui conduiraient à la formation de quantités importantes de vapeurs de chlorure d'hydrogène. Les températures comprises entre 75 et 150° C sont dès lors recommandées. Dans le cas de températures élevées il est souhaitable de travailler à une pression supérieure à la pression atmosphérique.

Pendant son passage à travers le lit, la solution d'acide chlorhydrique réagit avec l'oxyde de fer du minerai en formant du chlorure ferrique qui passe en solution. On obtient de la sorte une solution aqueuse de chlorure ferrique. La solution de chlorure ferrique entraîne de fines particules du minerai. Celles-ci proviennent de l'abrasion des fragments de minerai et de la fragmentation de ceux-ci au cours de la réaction de l'oxyde de fer avec l'acide chlorhydrique, et elles contiennent généralement une quantité non négligeable d'oxyde de fer. On recueille dès lors, à la sortie du lit, une suspension de particules de minerai dans une solution aqueuse de chlorure ferrique. Selon l'invention, cette suspension aqueuse est traitée pour en extraire séparément la solution aqueuse de chlorure ferrique, d'une part, et les particules de minerai, d'autre part, et ces particules de minerai sont recyclées dans la solution aqueuse d'acide chlorhydrique, en amont du lit de minerai. L'extraction des particules de minerai de la suspension aqueuse peut être opérée par tout moyen de séparation mécanique approprié, par exemple par une décantation, une centrifugation ou une filtration.

Dans le présent mémoire, les expressions "amont" et "aval" sont définies par rapport au sens de circulation de la solution aqueuse d'acide chlorhydrique, de la suspension, ou de la solution aqueuse de chlorure ferrique.

Dans une autre forme de réalisation particulière du procédé selon l'invention, la solution aqueuse de chlorure ferrique recueillie après extraction des particules de minerai est soumise à une évaporation partielle, pour la concentrer. Cette forme de réalisation du procédé selon l'invention permet l'utilisation de solutions aqueuses diluées d'acide chlorhydrique.

L'exécution du procédé selon l'invention implique la mise en oeuvre d'un réacteur en communication avec un dispositif d'admission du minerai, un dispositif d'admission de la solution aqueuse d'acide chlorhydrique et un dispositif d'extraction de la suspension de particules, qui est en communication avec un séparateur mécanique des particules de la suspension pour libérer la solution aqueuse de chlorure ferrique.

L'invention concerne dès lors également une installation pour la fabrication de solutions aqueuses de chlorure ferrique, dans laquelle le réacteur précité comprend une enceinte tubulaire verticale, le dispositif d'admission du minerai comprend une trémie disposée au-dessus de l'enceinte, le dispositif d'admission de la solution aqueuse d'acide chlorhydrique comprend une conduite débouchant dans la partie inférieure de l'enceinte et le dispositif d'extraction de la suspension aqueuse de particules comprend une conduite qui débouche dans la partie supérieure de l'enceinte et qui est en communication, en aval de l'enceinte, avec le séparateur mécanique de particules, ledit séparateur étant relié à la conduite d'admission de la solution aqueuse d'acide chlorhydrique.

Dans l'installation selon l'invention, on entend désigner par partie inférieure et partie supérieure de l'enceinte, les zones de celle-ci, qui sont respectivement situées au-dessous et au-dessus du milieu de sa hauteur utile, la hauteur utile de l'enceinte étant la hauteur de la charge de minerai dans l'enceinte pendant le fonctionnement normal de l'installation.

Le séparateur de particules n'est pas critique et peut être par exemple un décanteur, une essoreuse, un filtre ou une combinaison de ces dispositifs.

Dans une forme de réalisation préférée de l'installation selon l'invention, le séparateur mécanique comprend un hydrocyclone et un filtre couplés en série.

Le procédé et l'installation selon l'invention permettent de produire facilement des solutions concentrées de chlorure ferrique, avec une productivité et un rendement élevés.

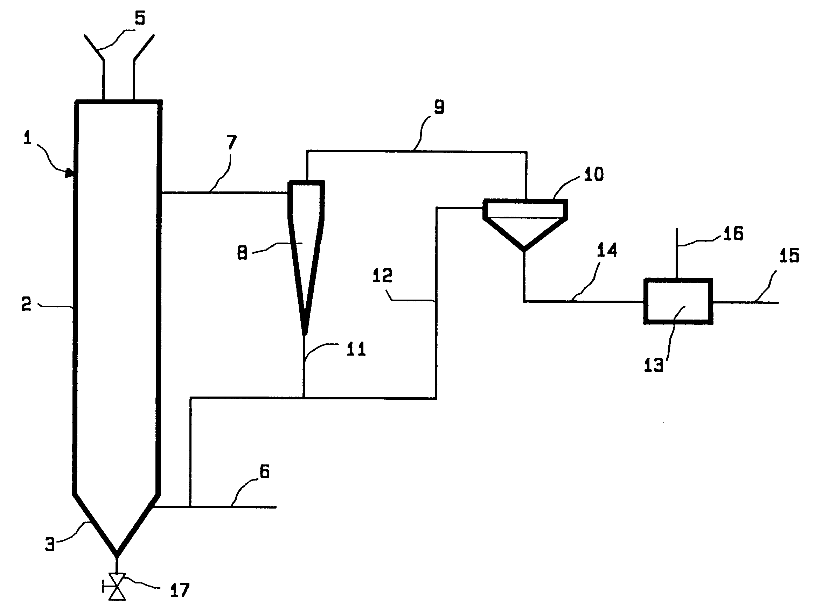

Des particularités et détails de l'invention vont ressortir de la description suivante de la figure unique du dessin annexé, qui représente schématiquement une forme de réalisation de l'installation selon l'invention.

L'installation représentée à la figure comprend un réacteur 1 constitué d'une enceinte tubulaire 2 prolongée, à sa partie inférieure, par une surface conique 3.

L'enceinte 2 est surmontée d'une trémie 5 utilisée pour alimenter le réacteur 1 en minerai.

Une conduite 6 débouche dans la partie inférieure du réacteur 1, au voisinage de la jonction entre la paroi de l'enceinte tubulaire 2 et la surface conique 3. Elle est destinée à alimenter le réacteur en solution aqueuse d'acide chlorhydrique.

Une conduite 7 relie la partie supérieure de l'enceinte 2 à un hydrocyclone 8. Le cyclone 8 est relié, à sa partie supérieure axiale, à une conduite 9 qui débouche sur un filtre 10. Une conduite 11 relie la partie inférieure du cyclone 8 à la conduite 6.

Le filtre 10 peut être, par exemple, un filtre-presse ou un filtre à bande. Il est destiné à traiter une suspension aqueuse recueillie du cyclone, pour en séparer les matières insolubles. Il est relié à la conduite 6 via un conduit 12 et à un évaporateur 13 via une conduite 14.

Pendant le fonctionnement de l'installation décrite ci-dessus, on alimente l'enceinte 2 avec un minerai d'hématite calibré, de manière à former un lit de fragments de minerai dont le niveau se situe au voisinage ou, de préférence, au-dessus du niveau de la conduite 7. On introduit par ailleurs une solution aqueuse d'acide chlorhydrique par la conduite d'alimentation 6.

Au moyen d'une pompe, non représentée, la solution aqueuse d'acide chlorhydrique est forcée à circuler de bas en haut dans la chambre 2, où elle traverse le lit de minerai et convertit l'hématite en chlorure ferrique qui passe en solution. Le débit de la solution d'acide chlorhydrique est réglé pour que le lit de minerai soit un lit fixe. On recueille par la conduite de soutirage 7, une solution aqueuse de chlorure ferrique. Celle-ci entraîne des fines particules de minerai qui proviennent notamment de l'abrasion à laquelle le minerai est soumis pendant son chargement dans l'enceinte 2. On obtient de la sorte une suspension de particules de minerai dans une solution aqueuse de chlorure ferrique. Cette suspension est envoyée, par la conduite 7, dans l'hydrocyclone 8, où s'effectue une séparation des particules de minerai de la solution de chlorure ferrique. Les particules de minerai sont soutirées du cyclone par la conduite 11 et recyclées dans la conduite 6. La solution aqueuse de chlorure ferrique recueillie du cyclone est envoyée, via le conduit 9, sur le filtre 10, pour éliminer les très fines particules de minerai qu'elle pourrait encore contenir. Les particules solides séparées sur le filtre sont recyclées dans la solution d'acide chlorhydrique, via le conduit 12. La solution filtrée de chlorure ferrique recueillie du filtre 10 est envoyée dans un évaporateur 13, d'où l'on soutire une solution concentrée de chlorure ferrique 15 et de la vapeur d'eau 16. La vapeur d'eau 16 peut être utilisée pour préchauffer la solution aqueuse d'acide chlorhydrique circulant dans la conduite 6.

Pendant l'exécution du procédé, les matières insolubles du minerai de fer s'accumulent progressivement dans le fond de la zone conique 3, d'où elles sont périodiquement soutirées par l'intermédiaire d'une vanne 17. Le moment opportun pour manoeuvrer la vanne 17 et soutirer les matières insolubles du réacteur peut être facilement déterminé par une mesure de la température régnant dans la chambre tubulaire 2. Une chute de la température au-dessous d'une valeur de consigne constitue en effet une indication du moment d'opérer un soutirage des matières insolubles.

## Revendications

1. Procédé de fabrication de solutions aqueuses de chlorure ferrique, dans lequel on fait circuler une solution aqueuse d'acide chlorhydrique à travers un lit de fragments d'un minerai de fer oxydé, caractérisé en ce qu'on soumet la solution aqueuse d'acide chlorhydrique à une circulation ascendante à travers le lit, on recueille du lit une suspension de particules du minerai dans une solution aqueuse de chlorure ferrique, on traite la suspension pour en extraire les particules, on recueille séparément les particules et la solution de chlorure ferrique et on recycle les particules dans la solution aqueuse d'acide chlorhydrique.

2. Procédé selon la revendication 1, caractérisé en ce que, pour séparer les particules de la suspension, on traite celle-ci successivement dans un hydrocyclone et sur un filtre.

3. Procédé selon la revendication 1 ou 2, caractérisé en ce que le minerai de fer oxydé est un minerai d'hématite.

4. Procédé selon l'une quelconque des revendications 1 à 3, caractérisé en ce qu'on met en oeuvre une solution aqueuse d'acide chlorhydrique contenant plus de 20 % en poids d'acide chlorhydrique.

5. Procédé selon l'une quelconque des revendications 1 à 4, caractérisé en ce qu'on soumet la solution aqueuse de chlorure ferrique à une évaporation partielle pour la concentrer.

6. Installation pour la fabrication de solutions aqueuses de chlorure ferrique, comprenant un réacteur en communication avec des dispositifs distincts pour l'admission d'un minerai, pour l'admission d'une solution aqueuse et pour l'extraction d'une suspension aqueuse, caractérisée en ce que le réacteur (1) comprend une enceinte tubulaire verticale (2), et en ce que les dispositifs précités comprennent une trémie (5) d'admission du minerai, disposée au-dessus de l'enceinte (2), une conduite (6) d'admission de la solution aqueuse débouchant dans la partie inférieure de l'enceinte (2) et une conduite (7) d'extraction de la suspension aqueuse, débouchant dans la partie supérieure de l'enceinte (2), ladite conduite d'extraction (7) étant en communication, en aval de l'enceinte (2), avec un séparateur de particules (8, 10) qui est relié à la conduite d'admission (6).

7. Installation selon la revendication 6, caractérisée en ce que le séparateur de particules comprend un hydrocyclone (8) suivi d'un filtre (10).

8. Installation selon la revendication 6 ou 7, caractérisée en ce qu'elle comprend un évaporateur (13), en aval du séparateur de particules (8, 10).

9. Installation selon l'une quelconque des revendications 6 à 8, caractérisée en ce que le fond de l'enceinte tubulaire (2) est munie d'un dispositif (17) d'extraction de constituants insolubles du minerai.

## Claims

1. Process for the manufacture of aqueous solutions of ferric chloride, in which an aqueous solution of hydrochloric acid is circulated through a bed of fragments of an oxide-containing iron ore, characterised in that the aqueous solution of hydrochloric acid is subjected to an upward travel through the bed, a suspension of ore particles in an aqueous solution of ferric chloride is collected from the bed, the suspension is treated in order to extract the particles therefrom, the particles and the solution of ferric chloride are collected separately and the particles are recycled into the aqueous solution of hydrochloric acid.

2. Process according to Claim 1, characterised in that, in order to separate the particles from the suspension, the latter is treated successively in a hydrocyclone and on a filter.

3. Process according to Claim 1 or 2, characterised in that the oxygen-containing iron ore is a haematite ore.

4. Process according to any one of Claims 1 to 3, characterised in that an aqueous solution of hydrochloric acid containing more than 20 % by weight of hydrochloric acid is used.

5. Process according to any one of Claims 1 to 4, characterised in that the aqueous solution of ferric chloride is subjected to a partial evaporation in order to concentrate it.

6. Plant for the manufacture of aqueous solutions of ferric chloride, comprising a reactor in communication with separate devices for allowing an ore to enter, for allowing an aqueous solution to enter and for extracting an aqueous suspension, characterised in that the reactor (1) comprises a vertical tubular enclosure (2) and in that the abovementioned devices comprise an ore entry hopper (5) arranged above the enclosure (2), an aqueous solution entry conduit (6) opening into the lower part of the enclosure (2) and a conduit (7) for extracting the aqueous suspension, opening into the upper part of the enclosure (2), the said extraction conduit (7) being in communication, downstream of the enclosure (2), with a particle separator (8, 10) which is connected to the entry conduit (6).

7. Plant according to Claim 6, characterised in that the particle separator comprises a hydrocyclone (8) followed by a filter (10).

8. Plant according to Claim 6 or 7, characterised in that it comprises an evaporator (13) downstream of the particle separator (8, 10).

9. Plant according to any one of Claims 6 to 8, characterised in that the bottom of the tubular enclosure (2) is provided with a device (17) for extracting insoluble constituents of the ore.

## Patentansprüche

1. Verfahren zur Herstellung von wäßrigen Eisenchloridlösungen, bei dem man eine wäßrige Salzsäurelösung durch ein Bett aus Teilchen eines Eisenoxidminerals strömen läßt, dadurch gekennzeichnet, daß man die wäßrige Salzsäurelösung einer aufsteigenden Zirkulation durch das Bett unterwirft, man aus dem Bett eine Suspension von Mineralteilchen in einer wäßrigen Eisenchloridlösung gewinnt, man die Suspension behandelt, um daraus die Teilchen zu extrahieren, man die Teilchen und die Eisenchloridlösung getrennt gewinnt und man die Teilchen in die wäßrige Salzsäurelösung zurückführt.

2. Verfahren gemäß Anspruch 1, dadurch gekennzeichnet, daß man, um die Teilchen von der Suspension abzutrennen, diese nacheinander in einem Wasserzyklon und über einen Filter behandelt.

3. Verfahren gemäß Anspruch 1 oder 2, dadurch gekennzeichnet, daß der Eisenoxidmineral ein Hematit-Mineral ist.

4. Verfahren gemäß einem der Ansprüche 1 bis 3, dadurch gekennzeichnet, daß man eine wäßrige Salzsäurelösung einsetzt, die mehr als 20 Gewichts-% Salzsäure enthält.

5. Verfahren gemäß einem der Ansprüche 1 bis 4, dadurch gekennzeichnet, daß man die wäßrige Eisenchloridlösung einer teilweisen Verdampfung unterzieht, um sie zu konzentrieren.

6. Vorrichtung zur Herstellung von wäßrigen Eisenchloridlösungen, die einen Reaktor in Verbindung mit unterschiedlichen Vorrichtungen zur Zuführung eines Minerals, zur Zuführung einer wäßrigen Lösung und zur Entnahme einer wäßrigen Suspension umfaßt, dadurch gekennzeichnet, daß der Reaktor (1) eine vertikale röhrenförmige Umschließung (2) umfaßt, und dadurch, daß die oben erwähnten Vorrichtungen einen über der Umschließung (2) angeordneten Trichter (5) zur Zuführung des Minerals, eine in den unteren Teil der Umschließung (2) mündende Leitung (6) zur Einführung der wäßrigen Lösung und eine in den oberen Teil der Umschließung (2) mündende Leitung (7) zur Entnahme der wäßrigen Suspension umfassen, wobei die besagte Leitung zur Entnahme (7) nach der Umschließung (2) mit einem Teilchenabscheider (8, 10), der mit der Zufuhrleitung (6) verbunden ist, in Verbindung steht.

7. Vorrichtung gemäß Anspruch 6, dadurch gekennzeichnet, daß der Teilchenabscheider einen Wasserzyklon (8), gefolgt von einem Filter (10), umfaßt.

8. Vorrichtung gemäß Anspruch 6 oder 7, dadurch gekennzeichnet, daß sie nach dem Teilchenabscheider (8, 10) einen Verdampfer (13) umfaßt.

9. Vorrichtung gemäß einem der Ansprüche 6 bis 8, dadurch gekennzeichnet, daß der Boden der röhrenförmigen Umschließung (2) mit einer Vorrichtung (17) zur Entnahme unlöslicher Mineralbestandteile versehen ist.
